(19) **Europäisches Patentamt**

**European Patent Office**

**Office européen des brevets**

(11) **EP 0 624 488 B1**

(12) **EUROPEAN PATENT SPECIFICATION**

(45) Date of publication and mention
of the grant of the patent:
**02.04.1997 Bulletin 1997/14**

(51) Int. Cl.$^6$: **B60K 31/00**, B60K 31/16

(21) Application number: **94107264.7**

(22) Date of filing: **10.05.1994**

(54) **Device for adjusting and limiting the motor vehicle speed**

Vorrichtung zur Einstellung und Begrenzung der Geschwindigkeit eines Kraftfahrzeuges

Dispositif de régulation et de limitation de la vitesse d'un véhicule à moteur

(84) Designated Contracting States:
**CH DE ES FR GB IT LI NL PT**

(30) Priority: **11.05.1993 IT MI930952**

(43) Date of publication of application:
**17.11.1994 Bulletin 1994/46**

(73) Proprietor: **Berra, Massimo Giancarlo**
**I-21052 Busto Arsizio (Varese) (IT)**

(72) Inventor: **Berra, Massimo Giancarlo**
**I-21052 Busto Arsizio (Varese) (IT)**

(74) Representative: **Gervasi, Gemma, Dr. et al**
**NOTARBARTOLO & GERVASI Srl,**
**Corso di Porta Vittoria, 9**
**20122 Milano (IT)**

(56) References cited:
**EP-A- 0 080 362**     **EP-A- 0 171 287**
**WO-A-84/03785**       **GB-A- 2 187 311**
**US-A- 3 878 915**

EP 0 624 488 B1

## Description

### FIELD OF THE INVENTION

The invention relates to an electronic device which allows the user to control the motor vehicle speed wherein the device is installed and to limit said speed to a maximum value, fixed from time to time according to the kind of road (urban streets or country roads, speed-limited routes, etc.), the environmental conditions (rain, slimy asphalt, etc.) and to the psycho-physical state of the driver, which can be influenced by several factors, among which is, for instance, its age: said maximum speed can be modified by the user (if he owns a valid "access" key) in order to fit it to specific situations and/or necessities. Such device is known from US-A-3 878 915.

### PRIOR ART

The features of present motor vehicles, which are more and more "on the razor's edge", increase the difficulties of driving, since the drivers are not always in a psycho-physical condition suitable to drive said vehicles with the necessary ability and care, not to become a potential danger for themselves and for the others.

Therefore, it seems suitable and advantageous to provide a vehicle with a device which allows (the owner or another enabled person) to limit the maximum speed before entrusting the vehicle to a driver who is at least potentially inexperienced (as, e.g., a beginner who drives his car and/or the car of a third person, usually the father, said car being often too powerful for the driving ability of the beginner) as well as to enter said device in order to modify and/or switch off said speed limit (in the previous example, when it is the third person who drives his car).

Beside enhancing active and passive road safety, a device for limiting the vehicle speed can be advantageously used in order to avoid fines and/or accessory penalties (such as, for instance, suspension or revocation of the driving licence) foreseen by the new highway code if the maximum speed allowed is exceeded; said advantage can be particularly interesting if the owner entrusts any other person, e.g. his employees, with his car or if he rents it: in both cases fines which have not been immediately paid by the driver will have to be paid by the owner, with scarce or no chances for the owner to be refunded by the responsible driver.

In order to be fully effective, said device for limiting the vehicle speed must provide one or more access key-words (mechanical and/or electronic) which allow only a limited amount of persons (e.g. the car owner or an employee of the firm charged to entrust the vehicle to other employees or to rent it to third persons) to switch off the device and/or to modify the allowed maximum speed.

Devices called "control stations", usually installed on high-class motor vehicles, are well known in the art.

Several sensors provide said devices with information concerning the vehicle speed and several significant parameters related to the engine working (consumption, mixture composition, temperature of the cooling fluid, position of the throttle valve of the carburettor, composition and/or temperature of the exhaust gases, etc.); by processing the collected data, said devices generate control signals for one or more actuators which, by working on parts of the engine (control of the throttle valve of the carburettor, control of the injection pump, control of the spark advance, regulation of the carburettor, etc.) make the engine work at its best.

According to a particular known embodiment, said control stations may also adjust the engine running in order to keep the vehicle to a constant cruising speed (memorized by the owner by means of a switch or of another equivalent means) even when the user does not push on the foot accelerator: said devices are usually automatically switched off as soon as the user increases the speed and/or brakes.

The device according to the invention is particularly suitable to be used in a motor vehicle equipped with a control station, since it employs at least some of the sensors and of the actuators already present on the vehicle; in other words, the device receives from the control station a control signal for one or more actuators and, accordingly, modifies it in order not to overcome the fixed speed. However, the device according to the present description may be installed also on motor vehicles which are not provided with control stations, as far as said vehicles are equipped with at least a speed sensor and with an electro-mechanical actuator which allows the control of a particular engine part (throttle valve of the carburettor, injection pump, etc.), suitable to set the rotation speed of the engine.

### SUMMARY OF THE INVENTION

An object of the present invention is an improved device for adjusting and limiting the motor vehicle speed as defined in claim 1.

In order to avoid any undue change of the device, in particular of the allowed maximum speed, it is suitable that a user may enter the logic unit memory only if he has one or more "access" keys which, preferably but not necessarily, are electronic ones (key-words); said key-words are recorded in the logic unit memory and may be modified by the enabled user by means of the keyboard belonging to the control panel which is used for modifying the maximum speed value.

### LIST OF FIGURES

The invention will now be better described in the following figures referring to an illustrative but not limitative embodiment, where:

- Figure 1 shows a block-diagram of a device according to the present invention;

- Figure 2 shows a flow-chart showing how logic unit UL of figure 1 works;
- Figure 3 shows a flow-chart showing an embodiment of the optional adjusting procedure CM of figure 2.

## DETAILED DESCRIPTION OF THE INVENTION

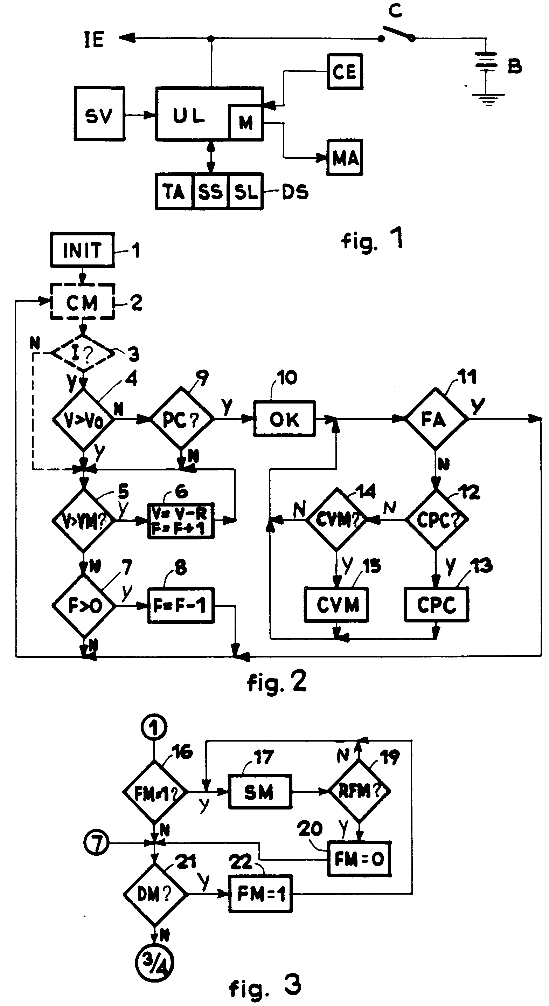

Figure 1 shows a block-diagram of a device for adjusting and limiting the vehicle speed according to the present invention installed on a motor vehicle equipped with a control station CE; said device, fed by a battery B by means of a general key switch C (further elements of the electric plant IE of the motor vehicle have been omitted in order to simplify the figure), is automatically switched on and off by pushing the general switch C without need of further controls or instructions.

Figure 1 represents the following functional blocks:

- control station CE;
- sensors SV to detect speed V of the motor vehicle;
- actuators MA to limit speed V of the motor vehicle by modifying the engine power;
- logic unit UL which receives from the control station CE the driving signals for the actuators MA, further processing them in response to the comparison between the value of the speed V detected by the sensors SV and a maximum value VM recorded in a data memory M (of non-volatile type, preferably but not necessarily an electrically erasable programmable read-only memory - EEPROM), before sending said signals to the actuators MA;
- a control panel DS which allows the user to access to the data memory M of logic unit UL in order to modify through the keyboard TA at least the maximum speed value VM recorded therein.

If the device, according to the present invention, is protected against undue alterations of the content of data memory M of the logic unit UL, in particular of the allowed maximum value VM, by means of at least a mechanical key of control and abilitation, the relative clutch (not shown in the figure) is located on the control panel DS; if said control and abilitation key is an electronic one (key-word), said key-word is recorded in data memory M of logic unit UL and may be modified, if necessary or suitable, through the keyboard TA belonging to the control panel DS.

Obviously, it is possible to provide a "mixed" protection comprising one or more mechanical keys and one or more key-words.

Furthermore, the control panel DS comprises sound signals SS (consisting of a buzzer or of another equivalent means) and light signals SL (consisting of a display and/or of a plurality of warning lights) which allow the logic unit UL to send to the user information and messages.

Without going out from the scope of the present invention, if the motor vehicle is not equipped with a control station CE the logic unit UL generates the control signals for the actuators MA in response to the aforesaid comparison between the speed values detected by the sensors SV and the maximum speed value VM recorded in data memory M.

Finally, if the power supply of the device according to the invention is switched off, the vehicle stops, since the control signals coming from the station CE are intercepted by the not-running logic unit UL and can not consequently reach the corresponding actuators MA.

Figure 2 shows a flow-chart showing the working of logic unit UL of figure 1.

When the device is switched on by means of the key switch C of figure 1, logic unit UL initializes (step 1, INIT) thus getting information from its data memory M (key-word PC, maximum speed value VM, etc.) and resetting a "field" F of data memory M to a prefixed value, e.g. F = 0, before going to step 4 or to the optional steps 2 and/or 3, independent from each other, which will be described hereinafter.

In case speed V of the vehicle is higher than a prefixed minimum value Vo (step 4) the next step is the adjusting and limiting procedure of speed V (steps 5-8), otherwise it is the updating procedure of data memory M (steps 9-15); since during this procedure the user must pay attention and, in case the new maximum speed value VM is lower than the one previously recorded in data memory M, it occurs a sudden dangerous deceleration of the vehicle and then, for safety's sake, it is suitable that the data memory M can be updated only in case the vehicle runs at a reduced speed Vo (which is anyway lower than the minimum admissible speed value VM) or preferably if the vehicle is stationary.

In order to update the data memory M, the user must digit (preferably within a prefixed while) the key-word PC (step 9); if this key-word is correct the system confirms it to the user (step 10, OK) through sound and/or light signals (SS, SL) mounted on the control panel DS and then goes to the following step (step 11), otherwise the following step is step 5 of the adjusting and limiting procedure of speed V.

If the user wishes to abandon the updating procedure (step 11), following steps are the optional steps 2 or 3 (if present) and step 4; otherwise, if the user wishes to update the key-word PC (step 12), he digits through the keyboard TA the new key-word PC which is recorded (step 13, CPC) in data memory M before going to step 11.

If the user wishes to update the maximum speed value VM (step 14) without updating the key-word PC (or if when he has recorded the new key-word PC, he wishes to update also the maximum speed value VM) he digits through the keyboard TA the new maximum speed value VM which is recorded (step 15, CMV) in the data memory M before going to the step 11; without going out from the scope of the present invention it is possible to modify the sequence of changes of the parameters VM and PC recorded in data memory M.

Since a vehicle running too slowly constitutes a hindrance for the traffic and is therefore a potential danger, in a particular embodiment of the present invention the new maximum speed value VM is recorded in data memory M only if it is not lower than a prefixed minimum value.

During the updating procedure of data memory M the control and adjusting procedure of speed V (steps 5-8) does not operate and the user may fix the vehicle speed as he pleases by switching off the device according to the present invention, without altering the program; any alteration would be noticed by the optional control procedure 2 (CM), if present.

If the vehicle speed V is higher than both the prefixed minimum value Vo (step 4) and the maximum value VM recorded in data memory M (step 5), logic unit UL drives the actuators MA of figure 1 in order to reduce speed V of a prefixed quantity R (preferably a small quantity, in order to avoid a quick deceleration of the vehicle; step 6, $V = V-R$ ); furthermore, said logic unit UL modifies of a step (e.g. it increases step; 6: $F = F + 1$ ) the field value F of data memory M before coming back to step 5 and cyclically repeating said loop, by progressively reducing speed V of the vehicle to a value lower than the maximum value VM.

The value of field F, strongly related to the amplitude of the control signals for the actuators MA generated by logic unit UL, fixes, instant by instant, the maximum rotation rate which can not be exceeded by the engine although the vehicle speed V is reduced for any reason (e.g. for down shifting, for a slope, even gentle, for inserting a higher maximum speed VM into data memory M, etc.) under the maximum value VM; in order to obviate said limitation, as soon as the vehicle reaches the wished cruising speed, logic unit UL, checks (step 7) that the field value F is different (e.g. higher) from its reset value and modifies back the field value F (e.g. if it had increased said value in step 6, it decreases the field value in step 8: $F = F-1$ , and viceversa) before coming back to the optional steps 2 and/or 3 (if present) and to step 4 in order to cyclically feed back said adjusting and limiting procedure of speed V.

As long as speed V is lower than the maximum value VM the engine can increase its rotation rate in each cycle in order to increase its speed V of the aforesaid prefixed quantity R; during the cruising state, once the vehicle has reached the maximum value VM, further modifications to the value of the field F (step 8) allow the engine to increase the (in a number of cycles which depends on the amount of R and on the engine "elasticity") its rotation rate and, consequently, to increase speed V of the vehicle, what implies (steps 5 and 6) an opposite modification of the value of the field F; therefore, during the cruising state the speed V of the vehicle fluctuates around the value VM with gaps not higher than the prefixed value R.

In order to further increase the reliability of a device according to the present invention it is possible to subordinate the access to data memory M to the switching on of further safety devices (e.g. fastening the safety belts); if said devices are on (optional step 3, signal I) the next step is to verify (step 4) whether vehicle speed V is higher than the minimum prefixed value Vo, otherwise the following step is the adjusting and limiting procedure of speed V (steps 5-8).

Figure 3 shows a flow-chart apt to illustrate an embodiment of the optional procedure CM (block 2 of figure 2) which shows any possible alteration (or attempted alterations) of the device object of the present invention.

If the optional procedure CM has been installed, during the initialization step (step 1, INIT) logic unit UL acquires from data memory M also a further bit FM, whose logic value is immediately verified (step 16); said logic value shows if a previous alteration (or an attempted alteration) of the device according to the present invention has been detected by the procedure CM.

In case an alteration was effectively detected, logic unit UL switches on (step 17, SM) the light and sound signals (SL, SS) of the control panel DS which are active as long as a prefixed deactivation code (e.g. the key-word PC) is introduced through the keyboard TA (step 19).

Once received the disactivation code, logic unit UL resets the bit FM (step 20, $FM = 0$ ) and then verifies (step 21) if the device according to the invention has been altered; in case said device has been altered, the logic unit resets bit FM (step 22, $FM = 1$ ) and goes to step 17, otherwise the logic unit UL goes to the optional step 3 (if present) and to step 4.

In order to discover alterations effected without deactivating the device according to the invention the relevant control (step 21) is performed each time that the updating procedure of data memory M (step 11) or the adjusting and limiting speed procedure (step 7 or 8) are left.

On the previous description, the existence of an alteration is associated, by way of example, to the logic value "1" of bit FM, but, without going out from the scope of the invention, this alteration can be associated to the logic value "0" of said bit.

As indicated above with reference to figure 1, logic unit UL receives the control signals for the actuators MA from the control station CE and processes them (according to the comparison between the speed values in detected by sensors SV and the maximum value VM recorded in data memory M) before sending said signals to the actuators: by connecting the wires coming from the station CE with the corresponding wires going to the actuators MA it is possible to escape the adjusting and limiting activity of logic unit UL, thus cutting it out from the circuit.

In a possible embodiment of the optional procedure CM, in order to show said possible illegal connections, logic unit UL sends a signal (e.g. an electric potential) to the wires coming from the station CE when the engine stops (step 21). The logic unit UL also verifies if (due to an illegal connection) said signal is present on the corresponding wires provided for the actuators MA, setting, if necessary, the bit FM (step 22, FM = 1 ).

Finally, if logic unit UL detects (step 16) that the bit FM is set and the user does not know the key-word, or (step 21) that the device according to the present invention was altered, logic unit UL is unable to enter either the adjusting and limiting procedure of speed V (steps 5-8) or the updating procedure of data memory M (steps 9-15).

Without leaving the scope of the present invention as defined in claim 1, it is possible for a person skilled in the art to modify and to improve the present device for adjusting and limiting the vehicle speed according to the normal experience and the natural evolution of technology.

## Claims

1. Device for adjusting and limiting the speed of a motor vehicle, comprising at least a sensor (SV) for detecting the speed (V) of said motor vehicle, actuating means (MA) for modifying the power produced by the engine of said motor vehicle in order to limit said speed (V), a control panel (DS) and a logic unit (UL) for adjusting said actuating means (MA) in response to the comparison between the value of said speed (V) detected by said at least a sensor (SV) and a maximum value of speed (VM) recorded in a memory (M) belonging to said logic unit (UL), characterized in that only one maximum value of speed (VM) is recorded in said memory (M) belonging to said logic unit (UL) and in that said control panel (DS) allows a user to enter said memory (M) belonging to said logic unit (UL) in order to modify said maximum value of speed (VM), the access of said user to said memory (M) belonging to said logic unit (UL) being conditioned by at least a control and enabling key.

2. Device according to claim 1, for adjusting ad limiting the speed of a motor vehicle equipped with a control station (CE) characterized in that in response to said comparison between said value of said speed (V) detected by said at least one sensor (SV) and said maximum value of speed (VM) recorded in said memory (M) belonging to said logic unit (UL), said logic unit (UL) processes at least one adjusting signal of said actuating means (MA) generated by said control station (CE).

3. Device according to claim 1, characterized in that said at least one control and enabling key is a keyword (PC) recorded in said memory (M) belonging to said logic unit (UL) and in that said control panel (DS) allows said user to modify said key-word (PC).

4. Device according to claim 1 characterized in that said memory (M) belonging to said logic unit (UL) is a non-volatile data memory.

5. Device according to claim 4, characterized in that said memory (M) belonging to said logic unit (UL) is an electrically erasable programmable read-only memory (EEPROM).

6. Device according to claim 1 characterized in that said control panel (DS) allows said user to receive information and messages from said logic unit (UL).

7. Device according to claim 1, characterized in that said logic unit (UL) sequentially performs the following functional steps:

A) to initialize said logic unit (UL) by acquiring from said memory (M) belonging to said logic unit (UL) at least said key-word (PC) and at least said maximum speed value (VM) and by resetting to a prefixed value a field (F) of said memory (M) belonging to said logic unit (UL);
B) to compare said speed (V) of said vehicle with a prefixed minimum value of speed (Vo);
C) if said speed (V) of said vehicle is higher than said minimum value of speed (Vo), to start an adjusting and limiting procedure of said speed (V) of said vehicle comprising at least the following sequence of functional steps:

a) to verify if said speed (V) of said vehicle is higher than said maximum speed value (VM);
b) if said speed (V) of said vehicle is higher than said maximum speed value (VM), to drive said actuating means (MA) in order to reduce said speed (V) of said vehicle by a prefixed quantity (R), to modify by one step the value of said field (F) of said memory (M) belonging to said logic unit (UL) and to verify if said speed (V) of said vehicle is higher than said maximum speed value (VM);
c) if said speed (V) of said vehicle is not higher than said maximum speed value (VM):

i) to compare said value of said field (F) of said memory (M) belonging to said logic unit (UL) with the relevant reset value;
ii) if said value of said field (F) of said memory (M) belonging to said logic unit (UL) is different from said reset value, to modify by one step in the opposite direction said value of said field (F) of said memory (M) belonging to said logic unit (UL) and to verify if said speed (V) of said vehicle is higher than said minimum speed value (Vo);

iii) if said value of said field (F) of said memory (M) belonging to said logic unit (UL) is not different from said reset value, to verify if said speed (V) of said vehicle is higher than said minimum speed value (Vo);

D) if said speed (V) of said vehicle is not higher than said minimum speed value (Vo), to start an updating procedure of said memory (M) belonging to said logic unit (UL) comprising at least a sequence of the following functional steps:

a) to receive from the user said key-word (PC) and to verify if it is correct;
b) if said key-word (PC) is not correct, to go to said adjusting and limiting procedure of said speed (V) of said vehicle;
c) if said key-word (PC) is correct, to confirm its acknowledgement and to verify if said user wishes to leave said updating procedure of said memory (M) belonging to said logic unit (UL);
d) if said user wishes to leave said updating procedure of said memory (M) belonging to said logic unit (UL), to compare said speed (V) of said vehicle with said minimum speed value (Vo), otherwise to verify if said user wishes to change said key-word (PC);
e) if said user wishes to change said key-word (PC), to record in said memory (M) belonging to said logic unit (UL) said new key-word (PC) and to verify if said user wishes to leave said updating procedure of said memory (M) belonging to said logic unit (UL); otherwise to verify if said user wishes to change said maximum speed value (VM);
f) if said user wishes to change said maximum speed value (VM), to record in said memory (M) belonging to said logic unit (UL) said new maximum speed value (VM) and to verify if said user wishes to leave said updating procedure of said memory (M) belonging to said logic unit (UL); otherwise to verify if said user wishes to leave said updating procedure of said memory (M) belonging to said logic unit (UL).

8. Device according to claim 7, characterized in that, during said updating procedure of said memory (M) belonging to said logic unit (UL), said new value of said maximum speed value (VM) is recorded in said memory (M) belonging to said logic unit (UL) only if it is not lower than a prefixed minimum value.

9. Device according to claim 7, characterized in that said logic unit (UL) performs, in sequence, at least the following further functional steps:

a) when said logic unit (UL) is initialized, to acquire from said memory (M) belonging to said logic unit (UL) a further bit (FM) and to verify its logic value;
b) if said further bit (FM) has a first logic value, to switch on said light and sound signals (SL, SS) belonging to the control panel (DS) and to verify if a disenabling code is entered by the user through said keyboard (TA) belonging to said control panel (DS);
c) if said disenabling code is not entered, to keep on said light and sound signals (SL, SS) belonging to said control panel (DS) and to verify if said disenabling code is entered by means of said keyboard (TA) belonging to said control panel (DS);
d) if said disenabling code is entered, to switch off said further bit (FM) to its second logic value and to verify if said adjusting and limiting device is altered;
e) if said further bit has its second logic value, to verify if said adjusting and limiting device is altered;
f) if said adjusting and limiting device is altered, to switch said further bit (FM) to its first logic value and to switch on said light and sound signals (SL,SS) belonging to said control panel (DS); otherwise, to go to said comparison between said speed (V) of said vehicle and said minimum speed value (Vo).

10. Device according to claim 9, characterized in that said disenabling code of said light and sound signals (SL, SS) belonging to said control panel (DS) coincides with said key-word (PC).

11. Device according to claim 7, characterized in that before the comparison between said speed (V) of said vehicle and said prefixed minimum value (Vo), said logic unit (UL) performs at least the following functional steps:

a) to verify if further safety devices are switched on;
b) if said further safety devices are on, to compare said speed (V) of said vehicle with said prefixed minimum value (Vo);
c) if said further safety devices are switched off, to go to said adjusting and limiting procedure of said speed (V) of said vehicle.

**Patentansprüche**

1. Vorrichtung zum Einstellen und Begrenzen der Geschwindigkeit eines Kraftfahrzeuges mit zumindest einem Sensor (SV) zum Erfassen der Geschwindigkeit (V) des Kraftfahrzeugs, einer Betätigungseinrichtung (MA) zum Modifizieren der von dem Motor des Kraftfahrzeugs erzeugten Leistung, um die Geschwindigkeit (V) zu begrenzen, einer Steuerkonsole (DS) und einer Logikeinheit (UL) zum Einstellen der Betätigungseinrichtung (MA) ansprechend auf den Vergleich zwischen dem Wert der durch den zumindest einen Sensor (SV) erfaßten Geschwindigkeit (V) und einem Maximalwert der Geschwindigkeit (VM), welcher in einem Speicher (M), der zur Logikeinheit (UL) gehört, gespeichert ist, dadurch gekennzeichnet, daß nur ein Maximalwert der Geschwindigkeit (VM) in dem Speicher (M) der zur Logikeinheit (UL) gehört, gespeichert ist, und daß die Steuerkonsole (DS) es einem Benutzer ermöglicht, eine Eingabe in den Speicher (M), der zu der Logikeinheit (UL) gehört, durchzuführen, um den Maximalwert der Geschwindigkeit (VM) zu modifizieren, wobei der Zugriff des Benutzers auf den Speicher (M), der zur Logikeinheit (UL) gehört, durch zumindest einen Steuer- und Aktivierungsschlüssel konditioniert ist.

2. Vorrichtung nach Anspruch 1 zum Einstellen und Begrenzen der Geschwindigkeit eines Kraftfahrzeugs, das mit einer Steuerstation (CE) ausgerüstet ist, dadurch gekennzeichnet, daß ansprechend auf den Vergleich zwischen dem durch den zumindest einen Sensor (SV) erfaßten Wert der Geschwindigkeit (V) und dem Maximalwert der Geschwindigkeit (VM), der in dem Speicher (M) gespeichert ist, der zur Logikeinheit (UM) gehört, die Logikeinheit (UL) zumindest ein Einstellsignal der Betätigungseinrichtung (MA), das durch die Steuerstation (CE) erzeugt wird, verarbeitet.

3. Vorrichtung nach Anspruch 1, dadurch gekennzeichnet, daß der zumindest eine Steuer- und Aktivierungsschlüssel ein Schlüsselwort (PC) ist, das in dem Speicher (M), der zur Logikeinheit (UL) gehört, gespeichert ist, und daß die Steuerkonsole (DS) es dem Benutzer ermöglicht, das Schlüsselwort (PC) zu modifizieren.

4. Vorrichtung nach Anspruch 1, dadurch gekennzeichnet, daß der Speicher (M), der zur Logikeinheit (UL) gehört, ein nicht-flüchtiger Datenspeicher ist.

5. Vorrichtung nach Anspruch 4, dadurch gekennzeichnet, daß der Speicher (M), der zur Logikeinheit (UL) gehört, ein elektrisch löschbarer programmierbarer Festwertspeicher (EEPROM) ist.

6. Vorrichtung nach Anspruch 1, dadurch gekennzeichnet, daß die Steuerkonsole (DS) es dem Benutzer ermöglicht, Informationen und Nachrichten von der Logikeinheit (UL) zu empfangen.

7. Vorrichtung nach Anspruch 1, dadurch gekennzeichnet, daß die Logikeinheit (UL) sequentiell die folgenden Funktionsschritte durchführt:

A) Initialisieren der Logikeinheit (UL) durch Akquirieren zumindest des Schlüsselworts (PC) und zumindest des maximalen Geschwindigkeitswerts (VM) von dem Speicher (M), der zur Logikeinheit (UL) gehört, und durch Rücksetzen eines Feldes (F) des Speichers (M), der zur Logikeinheit (UL) gehört, auf einen vorbestimmten Wert;

B) Vergleichen der Geschwindigkeit (V) des Fahrzeuges mit einem vorbestimmten Minimalwert der Geschwindigkeit ($V_o$);

C) falls die Geschwindigkeit (V) des Fahrzeugs höher als der Minimalwert der Geschwindigkeit ($V_o$) ist, Starten einer Einstell- und Begrenzungsprozedur der Geschwindigkeit (V) des Fahrzeugs mit zumindest der folgenden Sequenz an Funktionsschritten:

a) Verifizieren, ob die Geschwindigkeit (V) des Fahrzeugs höher als der maximale Geschwindigkeitswert (VM) ist;

b) falls die Geschwindigkeit (V) des Fahrzeugs höher als der maximale Geschwindigkeitswert (VM) ist, Ansteuern der Betätigungseinrichtung (MA) zum Reduzieren der Geschwindigkeit (V) des Fahrzeuges um eine vorbestimmte Größe (R), Modifizieren des Wertes des Feldes (F) des Speichers (M), der zu der Logikeinheit (UM) gehört, um einen Schritt und Verifizieren, ob die Geschwindigkeit (V) des Fahrzeugs höher als der maximale Geschwindigkeitswert (VM) ist;

c) falls die Geschwindigkeit (V) des Fahrzeugs nicht höher als der maximale Geschwindigkeitswert (VM) ist:

i) Vergleichen des Wertes des Feldes (F) des Speichers (M), der zur Logikeinheit (UL) gehört, mit dem relevanten Rücksetzwert;

ii) falls der Wert des Feldes (F) des Speichers (M), der zur Logikeinheit (UL) gehört, von dem Rücksetzwert verschieden ist, Modifizieren des Werts des Feldes (F) des Speichers (M), der zu der Logikeinheit (UL) gehört, um einen Schritt in der entgegengesetzten Richtung und Verifizieren, ob die Geschwindigkeit (V) des Fahrzeugs höher als der minimale Geschwindigkeitswert ($V_o$) ist;

iii) falls der Wert des Felds (F) des Speichers (M), der zu der Logikeinheit (UL) gehört, nicht von dem Rücksetzwert verschieden ist, Verifizieren, ob die Geschwindigkeit (V) des Fahrzeugs höher als der minimale Geschwindigkeitswert ($V_o$) ist,

D) falls die Geschwindigkeit (V) des Fahrzeugs nicht höher als der minimale Geschwindigkeitswert ($V_o$) ist, Starten einer Aktualisierungsprozedur des Speichers (M), der zu der Logikeinheit (UL) gehört, mit zumindest einer Sequenz der folgenden Funktionsschritte:

a) Empfangen des Schlüsselworts (PC) von dem Benutzer und Verifizieren, ob es richtig ist;

b) falls das Schlüsselwort (OC) nicht richtig ist, Fortfahren mit der Einstell- und Begrenzungsprozedur der Geschwindigkeit (V) des Fahrzeugs;

c) falls das Schlüsselwort (PC) richtig ist, Bestätigen seiner Anerkennung und Verifizieren, ob der Benutzer die Aktualisierungsprozedur des Speichers (M), der zu der Logikeinheit (UL) gehört, verlassen möchte;

d) falls der Benutzer die Aktualisierungsprozedur des Speichers (M), der zu der Logikeinheit (UL) gehört, verlassen möchte, Vergleichen der Geschwindigkeit des Fahrzeuges mit dem minimalen Geschwindigkeitswert ($V_o$) und sonst Verifizieren, ob der Benutzer das Schlüsselwort (PC) zu ändern wünscht;

e) falls der Benutzer das Schlüsselwort (PC) zu ändern wünscht, Speichern des neuen Schlüsselworts (PC) in dem Speicher (M), der zu der Logikeinheit (UL) gehört, und Verifizieren, ob der Benutzer die Aktualisierungsprozedur des Speichers (UL), der zu der Logikeinheit (UL) gehört, verlassen möchte; sonst Verifizieren, ob der Benutzer den maximalen Geschwindigkeitswert VM) ändern möchte;

f) falls der Benutzer den Maximalgeschwindigkeitswert (VM) ändern möchte, Speichern des neuen maximalen Geschwindigkeitswerts (VM) in dem Speicher (M), der zu der Logikeinheit (UL) gehört, und Verifizieren, ob der Benutzer die Aktualisierungsprozedur des Speichers (M), der zu der Logikeinheit (UL) gehört, verlassen möchte; sonst Verifizieren, ob der Benutzer die Aktualisierungsprozedur des Speichers (M), der zu der Logikeinheit (UL), verlassen möchte.

8. Vorrichtung nach Anspruch 7, dadurch gekennzeichnet, daß während der Aktualisierungsprozedur des Speichers (M), der zu der Logikeinheit (UL) gehört, der neue Wert des maximalen Geschwindigkeitswerts (VM) in dem Speicher (M), der zu der Logikeinheit (UL) gehört, nur gespeichert wird, falls er nicht niedriger als ein vorbestimmter Minimalwert ist.

9. Vorrichtung nach Anspruch 7, dadurch gekennzeichnet, daß die Logikeinheit (UL) sequentiell zumindest folgende weitere Funktionsschritte durchführt:

a) wenn die Logikeinheit (UL) initialisiert wird, Akquirieren eines weiteren Bits (FM) von dem Speicher (M), der zu der Logikeinheit (UL) gehört, und Verifizieren seines Logikwerts;

b) falls das weitere Bit (FM) einen ersten Logikwert aufweist, Einschalten von Licht- und Tonsignalen (SL, SS), die zu der Steuerkonsole (DS) gehören, und Verifizieren, ob ein Deaktivierungscode durch den Benutzer über die Tastatur (TA), die zu der Steuerkonsole (DS) gehört, eingegeben ist;

c) falls der Deaktivierungscode nicht eingegeben ist, Halten der Licht- und Tonsignale (SL, SS), die zu der Steuerkonsole (DS) gehören, im eingeschalteten Zustand und Verifizieren, ob der Deaktivierungscode mittels der Tastatur (TA), die zu der Steuerkonsole (DS) gehört, eingegeben ist;

d) falls der Deaktivierungscode eingegeben ist, Ausschalten des weiteren Bits (FM) auf seinen zweiten Logikwert und Verifizieren, ob die Einstell- und Begrenzungsvorrichtung verändert ist;

e) falls das weitere Bit seinen zweiten Logikwert einnimmt, Verifizieren, ob die Einstell- und Begrenzungsvorrichtung verändert ist;

f) falls die Einstell- und Bewertungsvorrichtung verändert ist, Schalten des weiteren Bits (FM) auf seinen ersten Logikwert und Einschalten der Licht- und Tonsignale (SL, SS), die zu der Steuerkonsole (DS) gehören, sonst Fortfahren mit dem Vergleich zwischen der Geschwindigkeit (V) des Fahrzeugs und der Minimalgeschwindigkeit (V$_o$).

10. Vorrichtung nach Anspruch 9, dadurch gekennzeichnet, daß der Deaktivierungscode der Licht- und Tonsignale (SL, SS), die zu der Steuerkonsole (DS) gehören, mit dem Schlüsselwort (PC) zusammenfällt.

11. Vorrichtung nach Anspruch 7, dadurch gekennzeichnet, daß die Logikeinheit (UL) vor dem Vergleich zwischen der Geschwindigkeit (V) des Fahrzeugs und dem vorbestimmten Minimalwert (V$_o$) zumindest einen der folgenden Funktionsschritte durchführt:

   a) Verifizieren ob weitere Sicherheitsvorrichtungen eingeschaltet sind;

   b) falls weitere Sicherheitsvorrichtungen eingeschaltet sind, Vergleichen der Geschwindigkeit (V) des Fahrzeugs mit dem vorbestimmten Minimalwert (V$_o$);

   c) falls die weiteren Sicherheitsvorrichtungen ausgeschaltet sind, Fortfahren mit der Einstell- und Begrenzungsprozedur der Geschwindigkeit (V) des Fahrzeugs.

## Revendications

1. Dispositif pour régler et limiter la vitesse d'un véhicule à moteur, comprenant au moins un détecteur (SV) pour détecter la vitesse (V) dudit véhicule à moteur, des moyens d'entraînement (MA) pour modifier la puissance produite par le moteur dudit véhicule à moteur afin de limiter ladite vitesse (V), un panneau de commande (DS) et un ensemble logique (UL) pour régler lesdits moyens d'entraînement (MA) en réponse à la comparaison entre la valeur de ladite vitesse (V) détectée par ledit au moins un détecteur (SV) et une valeur maximum de vitesse (VM) enregistrée dans une mémoire (M) faisant partie dudit ensemble logique (UL), caractérisé en ce que seule une valeur maximum de vitesse (VM) est enregistrée dans ladite mémoire (M) faisant partie dudit ensemble logique (UL) et en ce que ledit panneau de commande (DS) permet à un utilisateur d'enregistrer ladite mémoire (M) faisant partie dudit ensemble logique (UL) afin de modifier ladite valeur maximum de vitesse (VM), l'accès dudit utilisateur à ladite mémoire (M) faisant partie dudit ensemble logique (UL) conditionné par au moins uns touche de commande et de validation.

2. Dispositif selon la revendication 1, pour régler et limiter la vitesse d'un véhicule à moteur équipé d'un poste de commande (CE), caractérisé en ce que, en réponse à ladite comparaison entre ladite valeur de ladite vitesse (V) détectée par ledit au moins un détecteur (SV) et ladite valeur maximum de vitesse (VM) enregistrée dans ladite mémoire (M) faisant partie dudit ensemble logique (UL), ledit ensemble logique (UL) traite au moins un signal de réglage desdits moyens d'entraînement (MA) généré par ledit poste de commande (CE).

3. Dispositif selon, la revendication 1, caractérisé en ce que ladite au moins une touche de commande et de validation est un mot-clé (PC) enregistré dans ladite mémoire (M) faisant partie dudit ensemble logique (UL) et en ce que ledit panneau de commande (DS) permet audit utilisateur de modifier ledit mot-clé (PC).

4. Dispositif selon la revendication 1, caractérisé en ce que ladite mémoire (M) faisant partie dudit ensemble logique (UL) est une mémoire de données rémanente.

5. Dispositif selon la revendication 1, caractérisé en ce que ladite mémoire (M) faisant partie dudit ensemble logique (UL) est une mémoire morte programmable effaçable électriquement (EEPROM).

6. Dispositif selon la revendication 1, caractérisé en ce que ledit panneau de commande (DS) permet audit utilisateur de recevoir de l'information et des messages depuis ledit ensemble logique (UL).

7. Dispositif selon la revendication 1, caractérisé en ce que ledit ensemble logique (UL) effectue successivement les étapes fonctionnelles suivantes :

   A) initialisation dudit ensemble logique (UL) par acquisition depuis ladite mémoire (M) faisant partie dudit ensemble logique (UL) d'au moins ledit mot-clé (PC) et d'au moins ladite valeur de vitesse maximum (VM) et par recalage à une valeur préfixée d'un champ (F) de ladite mémoire (M) faisant partie dudit ensemble logique (UL) ;

   B) comparaison de ladite vitesse (V) dudit véhicule avec une valeur de vitesse minimum préfixée (Vo) ;

   C) si ladite vitesse (V) dudit véhicule est supérieure à ladite valeur de vitesse minimum (Vo), démarrer une procédure de réglage et de limitation de ladite vitesse (V) dudit véhicule comprenant au moins la série suivante d'étapes fonctionnelles :

      a) vérifier si ladite vitesse (V) dudit véhicule est supérieure à ladite valeur de vitesse maximum (VM) ;

      b) si ladite vitesse (V) dudit véhicule est supérieure à ladite valeur de vitesse maximum (VM), entraîner lesdits moyens d'entraînement (MA) afin de réduire ladite vitesse (V) dudit véhicule d'une grandeur préfixée (R) pour modifier d'un échelon la valeur dudit champ (F) de ladite mémoire (M) faisant partie dudit ensemble logique (UL) et vérifier si ladite vitesse (V) dudit véhicule est supérieure à ladite valeur de vitesse maximum (VM) ;

c) si ladite vitesse (V) dudit véhicule n'est pas supérieure à ladite valeur de vitesse maximum (VM) :

i) comparer ladite valeur dudit champ (F) de ladite mémoire (M) faisant partie dudit ensemble logique (UL) avec la valeur de recalage applicable ;

ii) si ladite valeur dudit champ (F) de ladite mémoire (M) faisant partie dudit ensemble logique (UL) est différente de ladite valeur de recalage, modifier d'un échelon dans la direction opposée ladite valeur dudit champ (F) de ladite mémoire (M) faisant partie dudit ensemble logique (UL) et vérifier si ladite vitesse (V) dudit véhicule est supérieure à ladite valeur de vitesse minimum (Vo) ;

iii) si ladite valeur dudit champ (F) de ladite mémoire (M) faisant partie dudit ensemble logique (UL) n'est pas différente de ladite valeur de recalage, vérifier si ladite vitesse (V) dudit véhicule est supérieure à ladite valeur de vitesse minimum (Vo) ;

D) si ladite vitesse (V) dudit véhicule n'est pas supérieure à ladite valeur de vitesse minimum (Vo), commencer une procédure de mise à jour de ladite mémoire (M) faisant partie dudit ensemble logique (UL) comprenant au moins une série des étapes fonctionnelles suivantes :

a) recevoir de la part de l'utilisateur ledit mot-clé (PC) et vérifier s'il est correct ;

b) si ledit mot-clé (PC) n'est pas correct, aller à ladite procédure de réglage et de limitation de ladite vitesse (V) dudit véhicule ;

c) si ledit mot-clé (PC) est correct, confirmer son accusé de réception et vérifier si ledit utilisateur souhaite quitter ladite procédure de mise à jour de ladite mémoire (M) faisant partie dudit ensemble logique (UL) ;

d) si ledit utilisateur souhaite quitter ladite procédure de mise à jour de ladite mémoire (M) faisant partie dudit ensemble logique (UL), comparer ladite vitesse (V) dudit véhicule avec ladite valeur de vitesse minimum (Vo), sinon vérifier si ledit utilisateur souhaite changer ledit mot-clé (PC) ;

e) si ledit utilisateur souhaite changer ledit mot-clé (PC), enregistrer dans ladite mémoire (M) faisant partie dudit ensemble logique (UL) ledit nouveau mot-clé (PC) et vérifier si ledit utilisateur souhaite quitter ladite procédure de mise à jour de ladite mémoire (M) faisant partie dudit ensemble logique (UL) ; sinon vérifier si ledit utilisateur souhaite changer ladite valeur de vitesse maximum (VM) :

f) si ledit utilisateur souhaite changer ladite valeur de vitesse maximum (VM), enregistrer dans ladite mémoire (M) faisant partie dudit ensemble logique (UL) ladite nouvelle valeur de vitesse maximum (VM) et vérifier si ledit utilisateur souhaite quitter ladite procédure de mise à jour de ladite mémoire (M) faisant partie dudit ensemble logique (UL) ; sinon vérifier si ledit utilisateur souhaite quitter ladite procédure ce mise à jour de ladite mémoire (M) faisant partie dudit ensemble logique (UL).

8. Dispositif selon la revendication 7, caractérisé en ce que, pendant ladite procédure de mise à jour de ladite mémoire (M) faisant partie dudit ensemble logique (UL), ladite nouvelle valeur de ladite valeur de vitesse maximum (VM) est enregistrée dans ladite mémoire (M) faisant partie dudit ensemble logique (UL) seulement si elle n'est pas inférieure à une valeur minimum préfixée.

9. Dispositif salon la revendication 7, caractérisé en ce que ledit ensemble logique (UL) effectue, en séquence, au moins les étapes fonctionnelles supplémentaires suivantes :

a) quand ledit ensemble logique (UL) est initialisé, acquérir de ladite mémoire (M) faisant partie dudit ensemble logique (UL) un bit supplémentaire (FM) et vérifier sa valeur logique ;

b) si ledit bit supplémentaire (FM) a une première valeur logique, mettre en circuit lesdits signaux lumineux et sonore (SL, SS) faisant partie du panneau de commande (DS) et vérifier si un code d'invalidation est entré par l'utilisateur au moyen du clavier (TA) faisant partie dudit panneau de commande (DS) ;

c) si ledit code d'invalidation n'est pas entré, maintenir lesdits signaux lumineux et sonore (SL, SS) faisant partie du panneau de commande (DS) et vérifier si ledit code d'invalidation est entré au moyen dudit clavier (TA) faisant partie dudit panneau de commande (DS) ;

d) si ledit code d'invalidation est entré, mettre hors circuit ledit bit supplémentaire (FM) à sa seconde valeur logique et vérifier si ledit dispositif de réglage et de limitation est modifié ;

e) si ledit bit supplémentaire a sa seconde valeur logique, vérifier si ledit dispositif de réglage et de limitation est modifié ;

f) si ledit dispositif de réglage et de limitation est modifié, commuter ledit bit supplémentaire (FM) sur sa première valeur logique et mettre en circuit lesdits signaux lumineux et sonore (SL, SS) faisant partie dudit panneau de commande (DS); sinon, se rendre à ladite comparaison entre ladite vitesse (V) dudit véhicule et ladite valeur de vitesse minimum (Vo).

10. Dispositif selon la revendication 9, caractérisé en ce que ledit code d'invalidation desdits signaux lumineux et sonore (SL, SS) faisant partie dudit panneau de commande (DS) coïncide avec ledit mot-clé (PC).

11. Dispositif selon la revendication 7, caractérisé en ce que, avant la comparaison entre ladite vitesse (V) dudit véhicule et ladite valeur minimum préfixée (Vo), ledit ensemble logique (UL) effectue au moins les étapes fonctionnelles suivantes :

a) vérifier si des dispositifs supplémentaires de sécurité sont mis en circuit ;

b) si lesdits dispositifs supplémentaires de sécurité sont en circuit, comparer ladite vitesse (V) dudit véhicule avec ladite valeur minimum préfixée (Vo) ;

c) si lesdits dispositifs supplémentaires de sécurité sont hors circuit, se rendre à ladite procédure de réglage et de limitation de ladite vitesse (V) dudit véhicule.

fig. 1

fig. 2

fig. 3